# EUROPÄISCHE PATENTSCHRIFT

(11) **EP 2 426 463 B1**
(45) Veröffentlichungstag und Bekanntmachung des Hinweises auf die Patenterteilung: **30.03.2016**
(21) Anmeldenummer: 11178213.2
(22) Anmeldetag: 22.08.2011
(51) Int. Cl.: G01D 4/00

(54) **Identifikationseinheit, Verbrauchswerterfassungsvorrichtung und Verfahren zur Erfassung von Verbrauchswerten**
Identification unit, consumption values recording device and method for recording consumption values
Unité d'identification, dispositif de relevé de valeurs de consommation et procédé de relevé de valeurs de consommation

(30) Priorität: 01.09.2010 DE 102010035988
(43) Veröffentlichungstag der Anmeldung: 07.03.2012
(73) Patentinhaber: QUNDIS GmbH, 99098 Erfurt (DE)
(72) Erfinder: Ziemann, Steffen, 99947 Bad Langensalza (DE)
(74) Vertreter: Liedtke, Markus

(56) Entgegenhaltungen:
- EP-A1- 1 748 282
- EP-A1- 2 192 386
- EP-A2- 1 855 253
- DE-A1- 10 233 721
- DE-A1-102008 063 878
- US-A1- 2008 284 614
- US-A1- 2009 153 357
- US-A1- 2009 195 349

## Beschreibung

Die Erfindung betrifft eine Identifikationseinheit nach den Merkmalen des Oberbegriffs des Anspruchs 1, eine Verbrauchswerterfassungsvorrichtung nach den Merkmalen des Oberbegriffs des Anspruchs 8 und ein Verfahren zur Erfassung von Verbrauchswerten nach den Merkmalen des Oberbegriffs des Anspruchs 10.

Aus dem Stand der Technik ist es bekannt, eine Verbrauchswerterfassungseinheit einem Erfassungsort durch eine Verknüpfung einer Zählernummer der Verbrauchswerterfassungseinheit mit einer Messstellennummer des Erfassungsortes zuzuordnen. Diese beiden Nummern werden manuell oder per Strichcodelesegerät von der Verbrauchswerterfassungseinheit bzw. vom Erfassungsort in ein Datenerfassungssystem transferiert. Diese Zuordnung der Verbrauchswerterfassungseinheit zum Erfassungsort erfolgt entweder bereits bei einem Betreiber des Datenerfassungssystems und der Verbrauchswerterfassungseinheit oder indem ein Monteur der Verbrauchswerterfassungseinheit bei deren Montage oder Austausch eine Montage- oder Aufmassliste in schriftlicher oder elektronischer Form erarbeitet und danach in das Datenerfassungssystem einpflegt bzw. in eine dafür vorgesehene Datenbank einspeichert.

In der EP 1 855 253 A2 werden eine Montageanordnung sowie ein Erfassungssystem mit einer solchen Anordnung beschrieben. Die Montageanordnung umfasst ein an einem Erfassungsort montierbares Montageelement und ein an dem Montageelement montierbares Erfassungsgerät. Das Montageelement weist wenigstens eine Informationseinheit mit einem nicht flüchtigen Speicher zur Speicherung von das Montageelement und/oder den Erfassungsort identifizierenden Informationen und/oder Daten auf. Am Erfassungsgerät ist wenigstens eine Leseeinheit zum Auslesen der Daten aus der Informationseinheit vorgesehen.

Aus der EP 1 748 282 A1 ist eine Einrichtung zur elektronischen Identifikation der Messstellen von Verbrauchszählern mit wenigstens einem Verbrauchszähler zur Anzeige der von wenigstens einer Messstelle erfassten Verbrauchsdaten bekannt. Der Verbrauchszähler oder eine mit dem Verbrauchszähler verbindbare Abfrageeinheit übermittelt die erfassten Verbrauchsdaten einer Erfassungs- und Auswerteeinheit. Der Messstelle ist wenigstens ein elektronisch auswertbares Identifizierungsmerkmal zur eindeutigen Kennzeichnung der Messstelle zugeordnet. Die Messstelle ist mit einer Sendereinheit zur Übertragung des elektronisch auswertbaren Identifizierungsmerkmales zu einer mit dem Verbrauchszähler oder der Abfrageeinheit verbundenen Empfängereinheit versehen. Der Verbrauchszähler oder die Abfrageeinheit stellt das zur Empfängereinheit übertragene elektronisch auswertbare Identifizierungsmerkmal der Messstelle zur weiteren Verarbeitung einer Erfassungs- und Auswerteeinheit bereit.

In der DE 102 33 721 A1 wird eine Zähleranordnung für die Verbrauchsmessung beschrieben. Die Zähleranordnung umfasst einen Verbrauchszähler mit Zählergehäuse, in dessen Innenraum zumindest eine Messeinrichtung sowie Mittel zur Speicherung von Verbrauchswerten untergebracht sind, sowie einen Daten- und Informationsträger.

Aus der DE 20 2009 017 791 U1 ist ein System zur Verfolgung eines Transportfahrzeuges in einer Transferstation bekannt. Das System umfasst mehrere erste Nahfeldeinrichtungen, welche an unterschiedlichen Standorten der Transferstation angeordnet sind, eine zweiten Nahfeldeinrichtung, welche am Transportfahrzeug angeordnet ist, wobei die Nahfeldeinrichtungen zum Bilden einer kapazitiv gekoppelten Nahfeld-Signalstrecke zwischen dem Transportfahrzeug und dem jeweils benachbarten Standort konfiguriert sind, eine zentralen Erfassungsstation und Mitteln zum übertragen von Informationen vom Transportfahrzeug zur zentralen Erfassungsstation, wenn eine Nahfeld-Signalstrecke zwischen dem Transportfahrzeug und einem benachbarten Standort besteht.

In der US 7,388,490 B2 werden Verfahren und Systeme zur Lokalisierung von Internettelefonen für verbesserte Notrufdienstleistungen beschrieben. Dabei sind an verschiedenen Orten eines Unternehmens RFID-Chips mit Ortsinformationen angeordnet, welche von den Internettelefonen ausgelesen werden können. Bei einem von den Internettelefonen ausgehenden Notruf werden diese Ortsinformationen an eine Notrufleitstelle übertragen.

Aus der US 2009/0195349 A1 sind ein System und ein Verfahren zur Energieüberwachung und Energiesteuerung bekannt. Eine Energiequelle und ein Energieverbraucher sind über das System miteinander verbunden. Ein Energieverbrauch des Energieverbrauchers und dessen Position werden mittels des Systems ermittelt, gespeichert und zu einer Steuereinheit gesendet.

In der EP 2 192 386 A1 werden ein Zähl- und Messpunkt-System und ein Verfahren zur Messung und Zählung von elektrischer Energie beschrieben. Das Zähl- und Messpunktsystem zur Messung und Zählung der von einer Verbrauchs- und/oder Erzeugungseinheit an einem festen geographischen Punkt aus einer Anschlussvorrichtung entnommenen oder in diese eingespeisten elektrischen Energie besteht aus einer identifizierbaren, ortsgebundenen Anschlussvorrichtung sowie einer identifizierbaren ortsungebundenen funktionalen Einheit, letztere bestehend aus je einer Vorrichtung zum Erfassen der Kennung der Anschlussvorrichtung, Zählen und Messen der aus der erkannten Anschlussvorrichtung entnommenen und/oder in diese eingespeisten elektrischen Energie, Speichern der ermittelten Zähl- und Messdaten sowie der ermittelten Kennung der jeweils genutzten Anschlussvorrichtung und Auslesen der gespeicherten Daten.

Aus der US 2008/0284614 A1 ist ein modulares Stromüberwachungssystem zur Überwachung von Eigenschaften eines Stromflusses durch Stromleitungen bekannt. Das Stromüberwachungssystem umfasst eine Basis und mehrere Optionsmodule. Die Basis umfasst einen Prozessor und die zugehörige Schaltung zur Verarbeitung von Signalen mit den Stromleitungen gekoppelter Sensoren und zum Erzeugen entsprechender Ausgangssignale sowie ein Gehäuse für den Prozessor und die zugehörige Schaltung. Das Gehäuse weist eine erste Oberfläche zum Montieren auf einer DIN-Schiene und eine zweite Oberfläche mit mehreren Anschlüssen zur Aufnahme der Optionsmodule und zur elektrischen Verbindung dieser Optionsmodule mit dem Prozessor und der zugehörigen Schaltung auf. Die Optionsmodule umfassen jeweils ein Gehäuse, welches eine Oberfläche mit einem Verbinder aufweist, der korrespondierend zu den Anschlüssen des Gehäuses der Basis ausgebildet ist, so dass jedes der Optionsmodule in jeden Anschluss des Gehäuses der Basis eingesteckt werden kann. Die Optionsmodule weisen des Weiteren jeweils eine Schaltung für die Verbindung mit dem Prozessor und der zugehörigen Schaltung in der Basis auf.

In der DE 10 2008 063 878 A1 wird ein Zusatzgerät für eine Kommunikation mit einem Stromzähler beschrieben. Das Zusatzgerät weist Anschlüsse zur Stromversorgung und Signalübertragung auf. Es ist ein die Anschlüsse umfassendes Trägermodul und ein unter Herstellung von elektrischen Verbindungen zu den Anschlüssen mit dem Trägermodul mechanisch verbindbares Hauptfunktionsmodul vorgesehen.

Aus der US 2009/0153357 A1 ist ein Verfahren zum Nachrüsten eines Gaszählers bekannt. Dabei wird ein Magnet derart auf einem Zählwerk des Gaszählers angeordnet, dass er sich mit dem Zählwerk dreht. Des Weiteren wird ein Sensor am Gaszähler angeordnet, um die Umdrehungen des sich mit dem Zählwerk drehenden Magneten zu erfassen.

Der Erfindung liegt die Aufgabe zu Grunde, eine Identifikationseinheit für eine Verbrauchswerterfassungsvornchtung, eine verbesserte Verbrauchswerterfassungsvorrichtung und ein verbessertes Verfahren zur Erfassung von Verbrauchswerten anzugeben.

Die Aufgabe wird erfindungsgemäß gelöst durch eine Identifikationseinheit für eine Verbrauchswerterfassungsvorrichtung mit den Merkmalen des Anspruchs 1, eine Verbrauchswerterfassungsvorrichtung mit den Merkmalen des Anspruchs 8 und ein Verfahren zur Erfassung von Verbrauchswerten mit den Merkmalen des Anspruchs 10.

Vorteilhafte Ausgestaltungen der Erfindung sind Gegenstand der Unteransprüche.

Eine Identifikationseinheit für eine Verbrauchswerterfassungsvorrichtung ist als eine Halterung der Verbrauchswerterfassungseinheit ausgebildet oder in eine Halterung der Verbrauchswerterfassungseinheit integriert und umfasst einen Speicher zur Speicherung einer Erfassungsortidentifikation und eine Kommunikationseinheit zur Kommunikation mit zumindest einer Verbrauchswerterfassungseinheit. Erfindungsgemäß umfasst die Identifikationseinheit eine Kommunikationseinheit zur Kommunikation mit zumindest einer Datenerfassungseinheit. Diese Kommunikationseinheit zur Kommunikation mit zumindest einer Datenerfassungseinheit kann mit der Kommunikationseinheit zur Kommunikation mit der Verbrauchswerterfassungseinheit identisch sein.

Mittels zumindest einer derartigen Identifikationseinheit ist eine Verbrauchswerterfassungsvorrichtung erstellbar, welche erfindungsgemäß zumindest eine Identifikationseinheit aufweist, die an einem Erfassungsort installiert ist, dessen Erfassungsortidentifikation im Speicher der Identifikationseinheit gespeichert ist, wobei die Identifikationseinheit über eine erste Kommunikationsverbindung zumindest zeitweise mit zumindest einer am Erfassungsort installierten Verbrauchswerterfassungseinheit verbunden ist und über eine zweite Kommunikationsverbindung zumindest zeitweise mit zumindest einer Datenerfassungseinheit verbunden ist und wobei die erste Kommunikationsverbindung und die zweite Kommunikationsverbindung jeweils als eine drahtgebundene Verbindung oder als eine drahtlose Verbindung, insbesondere Funkverbindung, ausgebildet sind.

Die Verbrauchswerterfassungseinheit kann ein beliebiges Gerät, insbesondere ein Messgerät oder ein Messsystem sein, beispielsweise ein Wasserzähler, ein Wärmezähler oder Wärmemengenzähler einer Heizungsanlage, einer Klimaanlage oder einer Warmwasserversorgung, ein Heizkostenverteiler, ein Gaszähler oder ein Stromzähler.

Die Identifikationseinheit ist am Erfassungsort der Verbrauchswerterfassungseinheit fest montiert. Dazu ist die Identifikationseinheit erfindungsgemäß als eine Halterung der Verbrauchswerterfassungseinheit ausgebildet oder in eine solche Halterung integriert. Die Halterung ist erfindungsgemäß als eine Montageplatte ausgebildet. An dieser Halterung, d. h. an der Montageplatte, ist die Verbrauchswerterfassungseinheit zu befestigen, so dass auf diese Weise sowohl die Identifikationseinheit als auch die Verbrauchswerterfassungseinheit eindeutig demselben Erfassungsort zugeordnet sind. Da zur Montage der Verbrauchswerterfassungseinheit ohnehin eine Halterung beispielsweise in Form einer Montageplatte vorgesehen ist, sind kein zusätzlicher Montageaufwand und kein zusätzlicher Bauraum am Erfassungsort erforderlich.

Im Speicher der Identifikationseinheit sind Informationen zum jeweiligen Erfassungsort, an welchem sie montiert ist, in Form einer Erfassungsortidentifikation gespeichert. Diese Informationen liegen entweder in expliziter Form vor, beispielsweise als geografische Daten des Erfassungsortes oder als Koordinatenpunkte des Erfassungsortes in einem vorgegebenen räumlichen Koordinatensystem, oder sie liegen in impliziter Form vor, beispielsweise in Form einer Nummerierung der Identifikationseinheit nach einem vorgegebenen System, zum Beispiel in Form einer Zählerplatznummer, welche in einer Datenbank einer Datenerfassungseinheit oder eines zentralen Datenerfassungs- und Auswertungssystems beispielsweise eines Versorgungsuntemehmens gespeichert ist.

Die Datenerfassungseinheit ist beispielsweise eine zentrale Datenerfassungseinheit eines Versorgungsunternehmens, welche Verbrauchswerte einer Vielzahl von Verbrauchswerterfassungseinheiten erfasst und verarbeitet, eine in einem Gebäude installierte stationäre Datenerfassungseinheit, welche Daten einer Mehrzahl von Verbrauchswerterfassungseinheiten des Gebäudes empfängt, oder eine mobile Datenerfassungseinheit zur Fernauslesung von Verbrauchswerterfassungseinheiten in einem Gebäude.

Zweckmäßigerweise weist die Identifikationseinheit ein Mittel zur Eingabe der Erfassungsortidentifikation auf, um diese während deren Produktion, während einer Montagevorbereitung oder während eines Montageprozesses der Identifikationseinheit unverlierbar in deren Speicher einzuprogrammieren oder zu parametrieren. Erfolgt dies bereits während der Produktion durch eine direkte Programmierung des Speichers, ist ein derartiges Mittel zur Eingabe nicht unbedingt erforderlich. Es ist jedoch sinnvoll, um die Eingabe der Erfassungsortidentifikation auch während einer Montagevorbereitung oder während eines Montageprozesses der Identifikationseinheit am Erfassungsort durchführen zu können.

Das Mittel zur Eingabe kann beispielsweise eine Datenschnittstelle der Identifikationseinheit sein, an welcher ein Computer anschließbar ist, oder ein Eingabemittel der Identifikationseinheit, zum Beispiel eine Tastatur oder eine berührungssensitive Anzeigeeinheit, ein so genanntes Touchscreen-Display. Des Weiteren kann die Identifikationseinheit als Mittel zur Eingabe der Erfassungsortidentifikation zum Beispiel auch einen Empfänger für Signale eines globalen Positionsbestimmungssystems, beispielsweise GPS, aufweisen, um auf diese Weise den Erfassungsort zu bestimmen, zum Beispiel während einer Montagevorbereitung, und als Erfassungsortidentifikation zu speichern.

Die Kommunikationseinheit der Identifikationseinheit ermöglicht die Kommunikation mit der Verbrauchswerterfassungseinheit. Dabei ist die Identifikationseinheit zumindest zeitweise über die erste Kommunikationsverbindung mit der Verbrauchswerterfassungseinheit verbunden. Die Kommunikation mit der Verbrauchswerterfassungseinheit kann drahtlos oder drahtgebunden erfolgen. Eine drahtlose Kommunikation erfolgt beispielsweise über Infrarot, über Funk, über Mobilfunk, über Bluetooth, über ZigBee oder über Wireless-LAN bzw. WI-FI. Eine drahtgebundene Kommunikation erfolgt beispielsweise über eine Telekommunikationsleitung oder über ein eigens dazu installiertes drahtgebundenes Netzwerk. Des Weiteren kann die Identifikationseinheit auch als ein RFID-Transponder (RFID = Radio Frequency Identification) ausgebildet sein und in der Verbrauchswerterfassungseinheit ein entsprechendes Lesegerät integriert sein, so dass der RFID-Transponder von der Verbrauchswerterfassungseinheit auslesbar ist.

Zur Übertragung der Daten der Verbrauchswerterfassungseinheit und der Erfassungsortidentifikation zur Datenerfassungseinheit ist die Identifikationseinheit über die zweite Kommunikationsverbindung zumindest zeitweise mit zumindest einer Datenerfassungseinheit verbunden, welche analog zur ersten Kommunikationsverbindung ebenfalls drahtlos, insbesondere als Funkverbindung, oder drahtgebunden ausgebildet sein kann. Auch hier kann eine drahtlose Kommunikation beispielsweise über Infrarot, über Funk, über Mobilfunk, über Bluetooth, über ZigBee oder über Wireless-LAN bzw. WI-FI erfolgen. Eine drahtgebundene Kommunikation kann auch hier beispielsweise über eine Telekommunikationsleitung oder über ein eigens dazu installiertes drahtgebundenes Netzwerk erfolgen.

In einer nicht erfindungsgemäßen Ausführungsform ist die Verbrauchswerterfassungseinheit zur Übertragung der Daten der Verbrauchswerterfassungseinheit und der Erfassungsortidentifikation zur Datenerfassungseinheit über die zweite Kommunikationsverbindung zumindest zeitweise mit zumindest einer Datenerfassungseinheit verbunden.

Die Daten der Verbrauchswerterfassungseinheit sind beispielsweise eine Gerätenummer der Verbrauchswerterfassungseinheit, Verbrauchswerte, Zeitstempel, Verlaufsdaten, Lastgangdaten und/oder Fehlerdaten.

In einem Verfahren zur Erfassung von Verbrauchswerten unter Verwendung der Verbrauchswerterfassungsvorrichtung mit zumindest einer Identifikationseinheit werden erfindungsgemäß die Daten der am Erfassungsort installierten Verbrauchswerterfassungseinheit und die Erfassungsortidentifikation, welche im Speicher der am Erfassungsort installierten Identifikationseinheit gespeichert ist, gemeinsam zu zumindest einer Datenerfassungseinheit übertragen, wobei die Daten der Verbrauchswerterfassungseinheit über eine erste Kommunikationsverbindung von der Verbrauchswerterfassungseinheit zur Identifikationseinheit übertragen werden und zusammen mit der Erfassungsortidentifikation über eine zweite Kommunikationsverbindung von der Identifikationseinheit zur Datenerfassungseinheit übertragen werden.

Durch die Verknüpfung beispielsweise der Gerätenummer der Verbrauchswerterfassungseinheit mit der Erfassungsortidentifikation der Identifikationseinheit ist die Verbrauchswerterfassungseinheit in der Datenerfassungseinheit eindeutig dem jeweiligen Erfassungsort zuzuordnen. Durch die Verknüpfung der weiteren Daten der Verbrauchswerterfassungseinheit mit der Erfassungsortidentifikation der Identifikationseinheit sind auch diese Daten eindeutig dem jeweiligen Erfassungsort und dadurch beispielsweise einem jeweiligen Verbraucher bzw. Kunden zuzuordnen.

Dadurch wird mittels der Verbrauchswerterfassungsvorrichtung, welche zumindest eine Identifikationseinheit aufweist und mittels des Verfahrens beispielsweise eine Verbrauchsabrechnung eines jeweiligen Verbrauchers bzw. Kunden wesentlich einfacher, exakter und wesentlich weniger fehleranfällig. Insbesondere ist dadurch beispielsweise eine Verbrauchswerterfassungseinheit schnell und unkompliziert gegen eine andere Verbrauchswerterfassungseinheit auszutauschen, zum Beispiel für einen turnusmäßigen Gerätetausch, für einen Eichaustausch oder für einen Tausch an einem Lebensdauerende der Verbrauchswerterfassungseinheit.

Da die Identifikationseinheit bei einem derartigen Austausch der Verbrauchswerterfassungseinheit am Erfassungsort verbleibt und die neu installierte Verbrauchswerterfassungseinheit wieder über die erste Kommunikationsverbindung mit der Identifikationseinheit kommuniziert, sind auch die Daten der neu installierten Verbrauchswerterfassungseinheit wieder mit der Erfassungsortidentifikation verknüpfbar und gemeinsam an die Datenerfassungseinheit übertragbar, so dass in der Datenerfassungseinheit die Daten der Verbrauchswerterfassungseinheit sofort dem Erfassungsort eindeutig zugeordnet werden können, d. h. es ist sofort beispielsweise über die neue Gerätenummer erfassbar, dass eine neue Verbrauchswerterfassungseinheit an dem Erfassungsort installiert ist und die Daten der neuen Verbrauchswerterfassungseinheit sind wieder eindeutig dem Erfassungsort zuzuordnen.

Ein umständliches manuelles oder mittels eines Strichcodelesegerätes durchzuführendes Einpflegen der neuen Daten der neuen Verbrauchswerterfassungseinheit, beispielsweise einer Zählemummer oder Gerätenummer und einer Messstellennummer, in eine Datenbank der Datenerfassungseinheit, wie dies im Stand der Technik üblich ist, entfällt auf diese Weise. Dadurch entfallen auch entsprechende Fehlerrisiken bei keinem oder einem fehlerhaften Ändern der Datenbank und daraus resultierenden Verbrauchswerterfassungsfehlern und in der Folge Abrechnungsfehlern.

Auch bereits eine Erstinstallation einer Verbrauchswerterfassungseinheit an einem Erfassungsort ist auf diese Weise wesentlich vereinfacht und Fehlerquellen sind eliminiert, da auch hier kein manuelles Einpflegen der Daten der Verbrauchswerterfassungseinheit in die Datenbank der Datenerfassungseinheit erforderlich ist. Auch hier sind die Daten der erstmals installierten Verbrauchswerterfassungseinheit mit der in der Identifikationseinheit gespeicherten Erfassungsort-identifikation verknüpfbar und gemeinsam an die Datenerfassungseinheit übertragbar, so dass auch bei einer Neuinstallation der Verbrauchswerterfassungseinheit eine eindeutige Zuordnung der Verbrauchswerterfassungseinheit sowie deren erfasster Daten zum Erfassungsort sichergestellt ist.

In einer nicht erfindungsgemäßen Ausführungsform des Verfahrens wird die Erfassungsortidentifikation über die erste Kommunikationsverbindung von der Identifikationseinheit zur Verbrauchswerterfassungseinheit übertragen und zusammen mit den Daten der Verbrauchswerterfassungseinheit über die zweite Kommunikationsverbindung von der Verbrauchswerterfassungseinheit zur Datenerfassungseinheit übertragen. Diese Ausführungsform des Verfahrens ist mit einer nicht erfindungsgemäßen Ausführungsform der Verbrauchswerterfassungsvorrichtung durchführbar, in welcher die Verbrauchswerterfassungseinheit über die zweite Kommunikationsverbindung zumindest zeitweise mit der Datenerfassungseinheit verbunden ist.

Sind unterschiedliche Kommunikationsformen zur Verbrauchswerterfassungseinheit und zur Datenerfassungseinheit vorgesehen, so kann die Kommunikationseinheit beispielsweise zwei Teilkommunikationseinheiten oder zwei Kommunikationsschnittstellen aufweisen oder die Identifikationseinheit weist zwei Kommunikationseinheiten auf. Um die Identifikationseinheit mit verschiedenen Verbrauchswerterfassungseinheiten verschiedener Hersteller verbinden zu können, ist vorzugsweise zumindest die Kommunikationseinheit, Teilkommunikationseinheit oder die Kommunikationsschnittstelle, welche zur Kommunikation mit der Verbrauchswerterfassungseinheit vorgesehen ist, als eine definierte, besonders bevorzugt als eine standardisierte Schnittstelle ausgebildet.

Vorteilhafterweise weist die Identifikationseinheit eine Energieversorgungseinheit auf. Dies ist insbesondere erforderlich, wenn die Kommunikation mit der Datenerfassungseinheit und/oder der Verbrauchswerterfassungseinheit drahtlos erfolgt, so dass keine Energieversorgung über die Kommunikationsverbindungen möglich ist. Eine derartige Energieversorgungseinheit ist bei einer Ausbildung der Identifikationseinheit als RFID-Transponder und bei einer Übertragung der Daten der Verbrauchswerterfassungseinheit und der Erfassungsortidentifikation von der Verbrauchswerterfassungseinheit über die zweite Kommunikationsverbindung zur Datenerfassungseinheit nicht erforderlich, da ein RFID-Transponder keine eigene Energieversorgung benötigt.

Die Energieversorgungseinheit ist beispielsweise als eine elektrochemische Batterie oder als ein Akkumulator direkt in die Identifikationseinheit integriert oder als ein Energieversorgungsanschluss beispielsweise an ein Energieversorgungsnetz ausgebildet. Des Weiteren ist beispielsweise als Energieversorgungseinheit auch eine Kombination eines Akkumulators mit einer oder mehreren Solarzellen oder Brennstoffzellen oder mit einem zumindest zeitweisen Anschluss an ein Energieversorgungsnetz sinnvoll, um den Akkumulator wieder laden zu können.

Vorteilhafterweise ist die erste und/oder die zweite Kommunikationsverbindung bidirektional ausgebildet. Auf diese Weise kann beispielsweise, wenn die zweite Kommunikationsverbindung zwischen der Datenerfassungseinheit und der Identifikationseinheit besteht, ein Signal von der Datenerfassungseinheit an die Identifikationseinheit und/oder von der Identifikationseinheit an die Verbrauchswerterfassungseinheit gesendet werden, um einen Datenübertragungsvorgang zu starten. Analog kann beispielsweise, wenn die zweite Datenübertragungsverbindung zwischen der Datenerfassungseinheit und der Verbrauchswerterfassungseinheit besteht, ein Signal von der Datenerfassungseinheit an die Verbrauchswerterfassungseinheit und/oder von der Verbrauchswerterfassungseinheit an die Identifikationseinheit gesendet werden, um einen Datenübertragungsvorgang zu starten.

Falls erforderlich, werden die von der Identifikationseinheit empfangenen Daten, bevor sie an die Datenerfassungseinheit oder die Verbrauchswerterfassungseinheit gesendet werden, in ein anderes Datenformat umgewandelt. Um diese Umwandlung zu ermöglichen, weist die Identifikationseinheit zweckmäßigerweise entsprechende Mittel auf, d. h. eine entsprechende Verarbeitungseinheit, zum Beispiel in Form eines Mikrorechners. Durch diese Umwandlung der Daten sind vorteilhafterweise über die Identifikationseinheit Verbrauchswerterfassungseinheiten und Datenerfassungseinheiten verschiedener Hersteller miteinander verbindbar, welche auf direktem Wege aufgrund deren Dateninkompatibilität nicht miteinander kommunizieren können.

Insbesondere bei einer zweiten Kommunikationsverbindung zwischen der Datenerfassungseinheit und der Identifikationseinheit und bei einer nur zeitweisen ersten und/oder zweiten Kommunikationsverbindung weist die Identifikationseinheit vorteilhafterweise eine Speichereinheit zur Zwischenspeicherung von Daten von der Datenerfassungseinheit an die Verbrauchswerterfassungseinheit und/oder von Daten von der Verbrauchswerterfassungseinheit an die Datenerfassungseinheit auf. Als derartige Speichereinheit ist beispielsweise der Speicher zur Speicherung der Erfassungsortidentifikation nutzbar, oder es ist eine eigene Speichereinheit für diesen Zweck in der Identifikationseinheit vorhanden.

Insbesondere bei drahtlosen ersten und zweiten Kommunikationsverbindungen, bei welchen in der Identifikationseinheit und/oder in der Verbrauchswerterfassungseinheit und/oder in der Datenerfassungseinheit eine Energieversorgung mittels einer Batterie oder eines Akkumulators und daher mit einem beschränkten Energievorrat üblich ist, können auf diese Weise beispielsweise zu vorgegebenen Zeitpunkten oder in vorgegebenen Zeiträumen Daten von der Verbrauchswerterfassungseinheit an die Identifikationseinheit gesendet und in dieser zwischengespeichert werden und zu vorgegebenen Zeitpunkten oder in vorgegebenen Zeiträumen von der Identifikationseinheit, mit der Erfassungsortidentifikation verknüpft, an die Datenerfassungseinheit gesendet werden. Auf diese Weise ist ein Energieverbrauch der Identifikationseinheit und/oder der Verbrauchswerterfassungseinheit und/oder der Datenerfassungseinheit reduzierbar und optimal planbar, so dass eine möglichst lange Lebensdauer ohne einen Austausch oder Wartungsarbeiten sichergestellt ist.

Selbstverständlich kann die Verbrauchswerterfassungsvorrichtung nicht nur eine Datenerfassungseinheit, nur eine Identifikationseinheit und nur eine Verbrauchswerterfassungseinheit aufweisen, sondern es sind auch andere Kombinationen möglich, beispielsweise eine Mehrzahl von Datenerfassungseinheiten und/oder eine Mehrzahl von Identifikationseinheiten und/oder eine Mehrzahl von Verbrauchswerterfassungseinheiten. So ist beispielsweise in einem Haus mit mehreren Wohnungen in jeder Wohnung eine Identifikationseinheit mit einer zugehörigen Verbrauchswerterfassungseinheit anordbar. Ein Versorgungs-unternehmen kann dann gleichzeitig oder nacheinander eine zweite Datenkommunikationsverbindung zu den jeweiligen Identifikationseinheiten bzw. zu den jeweiligen Verbrauchswerterfassungseinheiten aufbauen und die Daten der Verbrauchswerterfassungseinheiten, welche mit der jeweiligen Erfassungsortidentifikation verknüpft sind, auslesen. Die Daten der Verbrauchswerterfassungseinheiten sind auf diese Weise eindeutig einem jeweiligen Erfassungsort und dadurch einem jeweiligen Kunden zuzuordnen.

Eine derartige Kombination einer Datenerfassungseinheit oder einer Mehrzahl von Datenerfassungseinheiten mit einer Identifikationseinheit oder einer Mehrzahl von Identifikationseinheiten und einer Verbrauchswerterfassungseinheit oder einer Mehrzahl von Verbrauchswerterfassungseinheiten zu einer Verbrauchswerterfassungsvorrichtung wird insbesondere durch standardisierte Schnittstellen der Identifikationseinheiten für die Kommunikationsverbindungen zu den Verbrauchswerterfassungseinheiten und/oder zu den Datenerfassungseinheiten ermöglicht, wodurch verschiedene Verbrauchswerterfassungseinheiten und/oder verschiedene Datenerfassungseinheiten von jeweils verschiedenen Herstellern mit den Identifikationseinheiten verwendbar sind und zu einer Verbrauchswerterfassungsvorrichtung zusammenschaltbar sind.

Ausführungsbeispiele der Erfindung werden im Folgenden anhand von Zeichnungen näher erläutert.

Darin zeigen:
- Figur 1: eine schematische Darstellung einer einer Verbrauchswerterfassungsvorrichtung, und
- Figur 2: eine schematische Darstellung einer erfindungsgemäßen Ausführungsform einer Verbrauchswerterfassungsvorrichtung.

Einander entsprechende Teile sind in allen Figuren mit den gleichen Bezugszeichen versehen.

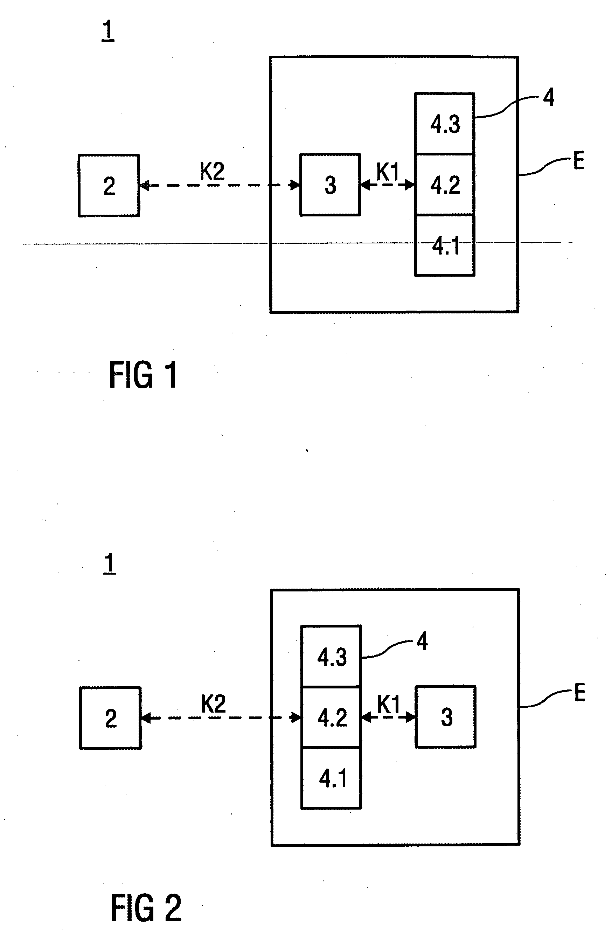

Figur 1 zeigt eine schematische Darstellung einer Verbrauchswerterfassungsvorrichtung 1. Die dargestellte Verbrauchswerterfassungsvorrichtung 1 umfasst eine Datenerfassungseinheit 2, eine Verbrauchswerterfassungseinheit 3 und eine Identifikationseinheit 4.

Die Verbrauchswerterfassungseinheit 3 kann ein beliebiges Gerät, insbesondere ein Messgerät oder ein Messsystem sein, beispielsweise ein Wasserzähler, ein Wärmezähler einer Heizungsanlage, einer Klimaanlage oder einer Warmwasserversorgung, ein Heizkostenverteiler, ein Gaszähler oder ein Stromzähler. Die Datenerfassungseinheit 2 ist beispielsweise eine zentrale Datenerfassungseinheit 2 eines Versorgungsunternehmens, welche Verbrauchswerte einer Vielzahl von Verbrauchswerterfassungseinheiten 3 erfasst und verarbeitet, eine in einem Gebäude installierte stationäre Datenerfassungseinheit 2, welche Daten einer Mehrzahl von Verbrauchswerterfassungseinheiten 3 des Gebäudes empfängt, oder eine mobile Datenerfassungseinheit 2 zur Fernauslesung von Verbrauchswerterfassungseinheiten 3 in einem Gebäude.

Die Identifikationseinheit 4 ist an einem Erfassungsort E der Verbrauchswerterfassungseinheit 3 fest montiert. Dazu ist die Identifikationseinheit 4 als eine Montageplatte der Verbrauchswerterfassungseinheit 3 ausgebildet oder in eine solche Halterung integriert.

Die Identifikationseinheit 4 weist einen Speicher 4.1 auf, in welchem Informationen zum jeweiligen Erfassungsort E, an welchem sie montiert ist, in Form einer Erfassungsortidentifikation gespeichert sind. Diese Informationen liegen entweder in expliziter Form vor, beispielsweise als geografische Daten des Erfassungsortes E oder als Koordinatenpunkte des Erfassungsortes E in einem vorgegebenen räumlichen Koordinatensystem, oder sie liegen in impliziter Form vor, beispielsweise in Form einer Nummerierung der Identifikationseinheit 4 nach einem vorgegebenen System, zum Beispiel in Form einer Zählerplatznummer, welche in einer Datenbank der Datenerfassungseinheit 2 gespeichert ist. Diese Erfassungsortidentifikation zum jeweiligen Erfassungsort E ist im Speicher 4.1 der Identifikationseinheit 4 während deren Produktion, während einer Montagevorbereitung oder während eines Montageprozesses der Identifikationseinheit 4 unverlierbar einzuprogrammieren oder zu parametrieren, beispielsweise durch eine direkte Programmierung des Speichers 4.1 während der Produktion, über eine Datenschnittstelle der Identifikationseinheit 4, an welcher ein Computer anschließbar ist, oder über Eingabemittel der Identifikationseinheit 4, zum Beispiel über eine Tastatur oder eine berührungssensitive Anzeigeeinheit, ein so genanntes Touchscreen-Display. Des Weiteren kann die Identifikationseinheit 4 beispielsweise auch einen Empfänger für Signale eines globalen Positionsbestimmungssystems, beispielsweise GPS, aufweisen, um auf diese Weise den Erfassungsort E zu bestimmen, zum Beispiel während einer Montagevorbereitung, und als Erfassungsortidentifikation zu speichern.

Die Identifikationseinheit 4 weist eine Kommunikationseinheit 4.2 auf, über welche sie mit der Verbrauchswerterfassungseinheit 3 kommunizieren kann, d. h. sie ist zumindest zeitweise über eine erste Kommunikationsverbindung K1 mit der Verbrauchswerterfassungseinheit 3 verbunden. In der in Figur 1 dargestellten Ausführungsform ist die Verbrauchswerterfassungseinheit 3 zumindest zeitweise über eine zweite Kommunikationsverbindung K2 mit der Datenerfassungseinheit 2 verbunden. Dabei kann sowohl die Kommunikation zwischen der Identifikationseinheit 4 und der Verbrauchswerterfassungseinheit 3 als auch zwischen der Identifikationseinheit 4 und der Datenerfassungseinheit 2 drahtlos oder drahtgebunden erfolgen.

Eine drahtlose Kommunikation erfolgt beispielsweise über Infrarot, über Funk, über Mobilfunk, über Bluetooth, über ZigBee oder über Wireless-LAN bzw. WI-FI. Eine drahtgebundene Kommunikation erfolgt beispielsweise über eine Telekommunikationsleitung oder über ein eigens dazu installiertes drahtgebundenes Netzwerk. Des Weiteren kann die Identifikationseinheit 4 auch als ein RFID-Transponder (RFID = Radio Frequency Identification) ausgebildet sein und in der Verbrauchswerterfassungseinheit 3 ein entsprechendes Lesegerät integriert sein, so dass der RFID-Transponder von der Verbrauchswerterfassungseinheit 3 auslesbar ist.

Um die Identifikationseinheit 4 mit verschiedenen Verbrauchswerterfassungseinheiten 3 verschiedener Hersteller verbinden zu können, ist deren Kommunikationseinheit 4.2 vorzugsweise als eine definierte, besonders bevorzugt als eine standardisierte Schnittstelle ausgebildet.

Um die Kommunikation mit der Verbrauchswerterfassungseinheit 3 zu ermöglichen, weist die Identifikationseinheit 4 des Weiteren eine Energieversorgungseinheit 4.3 auf. Diese Energieversorgungseinheit 4.3 ist beispielsweise als eine elektrochemische Batterie oder als ein Akkumulator direkt in die Identifikationseinheit 4 integriert oder als ein Energieversorgungsanschluss beispielsweise an ein Energieversorgungsnetz ausgebildet. Des Weiteren ist beispielsweise als Energieversorgungseinheit 4.3 auch eine Kombination eines Akkumulators mit einer oder mehreren Solarzellen oder Brennstoffzellen oder mit einem zumindest zeitweisen Anschluss an ein Energieversorgungsnetz sinnvoll, um den Akkumulator wieder laden zu können. Bei einer Ausbildung der Identifikationseinheit 4 als RFID-Transponder ist eine derartige Energieversorgungseinheit 4.3 nicht erforderlich.

In einer Ausführungsform des Verfahren zur Erfassung von Verbrauchswerten unter Verwendung der in Figur 1 dargestellten Ausführungsform der Verbrauchswerterfassungsvorrichtung 1 mit der Identifikationseinheit 4 kommuniziert die Identifikationseinheit 4 über die erste Kommunikationsverbindung K1 zumindest zeitweise mit der Verbrauchswerterfassungseinheit 3 und überträgt dabei die Erfassungsortidentifikation. Die Verbrauchswerterfassungseinheit 3 kommuniziert über die zweite Kommunikationsverbindung K2 zumindest zeitweise mit der Datenerfassungseinheit 2 und überträgt dabei ihre Daten zusammen mit der von der Identifikationseinheit 4 erhaltenen Erfassungsortidentifikation.

Die Daten der Verbrauchswerterfassungseinheit 3 sind beispielsweise eine Gerätenummer der Verbrauchswerterfassungseinheit 3, Verbrauchswerte, Zeitstempel, Verlaufsdaten, Lastgangdaten und/oder Fehlerdaten. Diesen Daten fügt die Verbrauchswerterfassungseinheit 3 die von der Identifikationseinheit 4 übertragene Erfassungsortidentifikation hinzu und leitet diese gemeinsam an die Datenerfassungseinheit 2 weiter.

Die Übertragung der Erfassungsortidentifikation von der Identifikationseinheit 4 auf die Verbrauchswerterfassungseinheit 3 kann lediglich einmal erfolgen, beispielsweise unmittelbar vor, während oder unmittelbar nach einer Installation der Verbrauchswerterfassungseinheit 3 am Erfassungsort E, oder wiederholt, beispielsweise immer dann, wenn die Verbrauchswerterfassungseinheit 3 ausgelesen wird, oder ständig. Bei einer einmaligen Übertragung der Erfassungsortidentifikation muss diese danach in der Verbrauchswerterfassungseinheit 3 gespeichert werden, um jeweils mit den Daten der Verbrauchswerterfassungseinheit 3 an die Datenerfassungseinheit 2 übertragen werden zu können.

Wird die Erfassungsortidentifikation ständig oder wiederholt von der Identifikationseinheit 4 auf die Verbrauchswerterfassungseinheit 3 übertragen, ist dies nicht erforderlich. Bei einer wiederholten Übertragung ist diese allerdings auf die Übertragung der Daten der Verbrauchswerterfassungseinheit 3 auf die Datenerfassungseinheit 2 abzustimmen, um jedes Mal die Erfassungsortidentifikation mit den Daten der Verbrauchswerterfassungseinheit 3 gemeinsam übertragen zu können. Dies kann beispielsweise über eine zeitliche Übertragungsplanung erfolgen oder durch eine bidirektionale Ausbildung der ersten Kommunikationsverbindung K1, so dass die Verbrauchswerterfassungseinheit 3 die Übertragung der Erfassungsortidentifikation von der Identifikationseinheit 4 anfordern kann, beispielsweise durch ein Senden eines entsprechenden Signals an diese.

Durch die Verknüpfung beispielsweise der Gerätenummer der Verbrauchswerterfassungseinheit 3 mit der Erfassungsortidentifikation der Identifikationseinheit 4 ist die Verbrauchswerterfassungseinheit 3 in der Datenerfassungseinheit 2 eindeutig dem jeweiligen Erfassungsort E zuzuordnen und durch die Verknüpfung der weiteren Daten der Verbrauchswerterfassungseinheit 3 mit der Erfassungsortidentifikation der Identifikationseinheit 4 sind auch diese Daten eindeutig dem jeweiligen Erfassungsort E und dadurch beispielsweise einem jeweiligen Verbraucher bzw. Kunden zuzuordnen.

Dadurch wird beispielsweise eine Verbrauchsabrechnung eines jeweiligen Verbrauchers bzw. Kunden wesentlich einfacher, exakter und wesentlich weniger fehleranfällig. Insbesondere ist dadurch beispielsweise eine Verbrauchswerterfassungseinheit 3 schnell und unkompliziert gegen eine andere Verbrauchswerterfassungseinheit 3 auszutauschen, zum Beispiel für einen turnusmäßigen Gerätetausch, für einen Eichaustausch oder für einen Tausch an einem Lebensdauerende der Verbrauchswerterfassungseinheit 3. Da die Identifikationseinheit 4 bei einem derartigen Austausch der Verbrauchswerterfassungseinheit 3 am Erfassungsort E verbleibt und die neu installierte Verbrauchswerterfassungseinheit 3 ihre Daten wieder an die Identifikationseinheit 4 sendet und diese die Daten wieder mit der Erfassungsortidentifikation verknüpft an die Datenerfassungseinheit 2 sendet, sind diese Daten in der Datenerfassungseinheit 2 sofort dem Erfassungsort E eindeutig zugeordnet, d. h. es wird sofort über die neue Gerätenummer erfasst, dass eine neue Verbrauchswerterfassungseinheit 3 an dem Erfassungsort E installiert ist und die Daten der neuen Verbrauchswerterfassungseinheit 3 werden wieder eindeutig dem Erfassungsort E zugeordnet.

Ein umständliches manuelles oder mittels eines Strichcodelesegerätes durchzuführendes Einpflegen der neuen Daten der neuen Verbrauchswerterfassungseinheit 3, beispielsweise einer Zählernummer oder Gerätenummer und einer Messstellennummer, in eine Datenbank der Datenerfassungseinheit 2 entfällt auf diese Weise. Dadurch entfallen auch entsprechende Fehlerrisiken bei keinem oder einem fehlerhaften Ändern der Datenbank und daraus resultierenden Verbrauchswerterfassungsfehlern und in der Folge Abrechnungsfehlern.

Auch bereits eine Erstinstallation einer Verbrauchswerterfassungseinheit 3 an einem Erfassungsort E wird auf diese Weise wesentlich vereinfacht und Fehlerquellen werden eliminiert, da auch hier kein manuelles Einpflegen der Daten der Verbrauchswerterfassungseinheit 3 in die Datenbank der Datenerfassungseinheit 2 erforderlich ist. Auch hier werden die Daten der erstmals installierten Verbrauchswerterfassungseinheit 3 über die Identifikationseinheit 4 an die Datenerfassungseinheit 2 übertragen und dabei mit der in der Identifikationseinheit 4 gespeicherten Erfassungsortidentifikation verknüpft, so dass auch bei einer Neuinstallation der Verbrauchswerterfassungseinheit 3 eine eindeutige Zuordnung der Verbrauchswerterfassungseinheit 3 sowie deren erfasster Daten zum Erfassungsort E sichergestellt ist.

In Figur 2 ist eine erfindungsgemäße Ausführungsform der Verbrauchswerterfassungsvorrichtung 1 dargestellt, mittels welcher ebenfalls die genannten Vorteile erzielbar sind. Die Identifikationseinheit 4 weist hier die Kommunikationseinheit 4.2 auf, über welche sie sowohl mit der Verbrauchswerterfassungseinheit 3 als auch mit der Datenerfassungseinheit 2 kommunizieren kann, d. h. sie ist zumindest zeitweise über die erste Kommunikationsverbindung K1 mit der Verbrauchswerterfassungseinheit 3 verbunden und des Weiteren zumindest zeitweise über die zweite Kommunikationsverbindung K2 mit der Datenerfassungseinheit 2 verbunden. Auch hier können die Kommunikationsverbindungen K1, K2, wie bereits beschrieben, drahtlos oder drahtgebunden ausgeführt sein.

Sind unterschiedliche Kommunikationsformen zur Verbrauchswerterfassungseinheit 3 und zur Datenerfassungseinheit 2 vorgesehen, so kann die Kommunikationseinheit 4.2 beispielsweise zwei Teilkommunikationseinheiten oder zwei Kommunikationsschnittstellen aufweisen oder die Identifikationseinheit 4 weist zwei Kommunikationseinheiten 4.2 auf. Um die Identifikationseinheit 4 mit verschiedenen Verbrauchswerterfassungseinheiten 3 verschiedener Hersteller verbinden zu können, ist vorzugsweise zumindest die Kommunikationseinheit 4.2, Teilkommunikationseinheit oder die Kommunikationsschnittstelle, welche zur Kommunikation mit der Verbrauchswerterfassungseinheit 3 vorgesehen ist, als eine definierte, besonders bevorzugt als eine standardisierte Schnittstelle ausgebildet.

Um die Kommunikation mit der Datenerfassungseinheit 2 und der Verbrauchswerterfassungseinheit 3 zu ermöglichen, weist die Identifikationseinheit 4 des Weiteren auch hier die Energieversorgungseinheit 4.3 auf, welche analog der ersten Ausführungsform ausgebildet sein kann.

In einer weiteren Ausführungsform des Verfahren zur Erfassung von Verbrauchswerten unter Verwendung der in Figur 2 dargestellten zweiten Ausführungsform der Verbrauchswerterfassungsvorrichtung 1 mit der Identifikationseinheit 4 kommunizieren die Datenerfassungseinheit 2 und die Verbrauchswerterfassungseinheit 3 nicht direkt miteinander, sondern ausschließlich über die Identifikationseinheit 4.

Dabei kann die Identifikationseinheit 4 über die erste Kommunikationsverbindung K1 von der Verbrauchswerterfassungseinheit 3 Daten empfangen und Daten an diese senden, und sie kann über die zweite Kommunikationsverbindung K2 Daten von der Datenerfassungseinheit 2 empfangen und an diese senden, d. h. die Identifikationseinheit 4 leitet Daten von der Verbrauchswerterfassungseinheit 3 an die Datenerfassungseinheit 2 und umgekehrt weiter, wobei sie die Daten, falls erforderlich, vor dem Weiterleiten in ein anderes Datenformat umwandelt. Um diese Umwandlung zu ermöglichen, weist die Identifikationseinheit 4 entsprechende, hier nicht näher dargestellte Mittel auf, d. h. eine entsprechende Verarbeitungseinheit, zum Beispiel in Form eines Mikrorechners.

Die Daten, welche die Identifikationseinheit 4 von der Verbrauchswerterfassungseinheit 3 empfängt und an die Datenerfassungseinheit 2 weiterleitet, sind, analog zur ersten Ausführungsform der Verbrauchswerterfassungsvorrichtung 1 beispielsweise die Gerätenummer der Verbrauchswerterfassungseinheit 3, Verbrauchswerte, Zeitstempel, Verlaufsdaten, Lastgangdaten und/oder Fehlerdaten. Diesen Daten fügt die Identifikationseinheit 4 die in ihrem Speicher 4.1 gespeicherte Erfassungsortidentifikation hinzu und leitet diese gemeinsam an die Datenerfassungseinheit 2 weiter.

Insbesondere bei einer nur zeitweisen ersten und/oder zweiten Kommunikationsverbindung K1, K2 weist die Identifikationseinheit 4 vorteilhafterweise eine Speichereinheit zur Zwischenspeicherung von Daten von der Datenerfassungseinheit 2 an die Verbrauchswerterfassungseinheit 3 und/oder von Daten von der Verbrauchswerterfassungseinheit 3 an die Datenerfassungseinheit 2 auf. Als derartige Speichereinheit kann beispielsweise der Speicher 4.1 zur Speicherung der Erfassungsortidentifikation genutzt werden, oder es ist eine eigene Speichereinheit für diesen Zweck in der Identifikationseinheit 4 vorhanden.

Insbesondere bei drahtlosen ersten und zweiten Kommunikationsverbindungen K1, K2, bei welchen in der Identifikationseinheit 4 und/oder in der Verbrauchswerterfassungseinheit 3 und/oder in der Datenerfassungseinheit 2 eine Energieversorgung mittels einer Batterie oder eines Akkumulators und daher mit einem beschränkten Energievorrat üblich ist, können auf diese Weise beispielsweise zu vorgegebenen Zeitpunkten oder in vorgegebenen Zeiträumen Daten von der Verbrauchswerterfassungseinheit 3 an die Identifikationseinheit 4 gesendet und in dieser zwischengespeichert werden und zu vorgegebenen Zeitpunkten oder in vorgegebenen Zeiträumen von der Identifikationseinheit 4, mit der Erfassungsortidentifikation verknüpft, an die Datenerfassungseinheit 2 gesendet werden. Auf diese Weise ist ein Energieverbrauch der Identifikationseinheit 4 und/oder der Verbrauchswerterfassungseinheit 3 und/oder der Datenerfassungseinheit 2 reduzierbar und optimal planbar, so dass eine möglichst lange Lebensdauer ohne einen Austausch oder Wartungsarbeiten sichergestellt ist.

Im hier dargestellten Beispiel weist die Verbrauchswerterfassungsvorrichtung 1 nur eine Datenerfassungseinheit 2, nur eine Identifikationseinheit 4 und nur eine Verbrauchswerterfassungseinheit 3 auf. Es sind jedoch auch andere Kombinationen möglich, beispielsweise eine Mehrzahl von Datenerfassungseinheiten 2 und/oder eine Mehrzahl von Identifikationseinheiten 4 und/oder eine Mehrzahl von Verbrauchswerterfassungseinheiten 3, wobei in der Praxis eine Kombination mehrerer Identifikationseinheiten 4, welche jeweils über eine erste Kommunikationsverbindung K1 mit einer ihr zugeordneten, am Erfassungsort E angeordneten Verbrauchswerterfassungseinheit 3 verbunden sind, mit einer Datenerfassungseinheit 2 am sinnvollsten ist.

So ist beispielsweise die Identifikationseinheit 4 in einer Wohnung eines Kunden angeordnet und mit einer als Wasserzähler ausgebildeten Verbrauchswerterfassungseinheit 3 zumindest zeitweise über die erste Kommunikationsverbindung K1 verbunden. Ein Gebäude weist eine Mehrzahl dieser Wohnungen auf, in welchen jeweils derartige Identifikationseinheiten 4 und mit diesen zumindest zeitweise verbundene, als Wasserzähler ausgebildete Verbrauchswerterfassungseinheiten 3 angeordnet sind.

Auf diese Weise kann ein Wasserversorger beispielsweise mit einer mobilen Datenerfassungseinheit 2 alle Verbrauchswerterfassungseinheiten 3 des Gebäudes ablesen. Die erhaltenen Daten der jeweiligen Verbrauchswerterfassungseinheit 3 sind dabei jeweils mit der Erfassungsortidentifikation verknüpft, so dass diese eindeutig einem jeweiligen Verbraucher bzw. Kunden zugeordnet werden können.

Eine derartige Kombination einer Datenerfassungseinheit 2 oder einer Mehrzahl von Datenerfassungseinheiten 2 mit einer Identifikationseinheit 4 oder einer Mehrzahl von Identifikationseinheiten 4 und einer Verbrauchswerterfassungseinheit 3 oder einer Mehrzahl von Verbrauchswerterfassungseinheiten 3 zu einer Verbrauchswerterfassungsvorrichtung 1 wird insbesondere durch standardisierte Schnittstellen der Identifikationseinheiten 4 für die Datenübertragung, d. h. für die erste Kommunikationsverbindungen K1 und, wenn auch die zweite Kommunikationsverbindung K2 von der Identifikationseinheit 4 ausgeht, auch für diese ermöglicht, wodurch verschiedene Verbrauchswerterfassungseinheiten 3 und/oder verschiedene Datenerfassungseinheiten 2 von jeweils verschiedenen Herstellern mit den Identifikationseinheiten 4 verwendet werden können und zu einer Verbrauchswerterfassungsvorrichtung 1 zusammengeschaltet werden können.

### BEZUGSZEICHENLISTE

- 1: Verbrauchswerterfassungsvorrichtung
- 2: Datenerfassungseinheit
- 3: Verbrauchswerterfassungseinheit
- 4: Identifikationseinheit
- 4.1: Speicher
- 4.2: Kommunikationseinheit
- 4.3: Energieversorgungseinheit

- E: Erfassungsort

- K1: erste Kommunikationsverbindung
- K2: zweite Kommunikationsverbindung

## Patentansprüche

1. Identifikationseinheit (4) für eine Verbrauchswerterfassungsvorrichtung (1), wobei die Identifikationseinheit (4) als eine Halterung der Verbrauchswerterfassungseinheit (3) ausgebildet ist oder in eine Halterung der Verbrauchswerterfassungseinheit (3) integriert ist und wobei die Halterung als eine Montageplatte ausgebildet ist, umfassend einen Speicher (4.1) zur Speicherung einer Erfassungsortidentifikation und eine Kommunikationseinheit (4.2) zur Kommunikation mit zumindest einer Verbrauchswerterfassungseinheit (3),
**gekennzeichnet durch** eine Kommunikationseinheit (4.2) zur Kommunikation mit zumindest einer Datenerfassungseinheit (2).

2. Identifikationseinheit (4) nach Anspruch 1,
**dadurch gekennzeichnet, dass** die Kommunikationseinheit (4.2) sowohl zur Kommunikation mit der zumindest einen Verbrauchswerterfassungseinheit (3) als auch zur Kommunikation mit der zumindest einen Datenerfassungseinheit (2) ausgebildet ist und dafür zwei Teilkommunikationseinheiten oder zwei Kommunikationsschnittstellen aufweist, wobei die eine Teilkommunikationseinheit oder Kommunikationsschnittstelle zur Kommunikation mit der Verbrauchswerterfassungseinheit (3) und die andere Teilkommunikationseinheit oder Kommunikationsschnittstelle zur Kommunikation mit der Datenerfassungseinheit (2) ausgebildet ist.

3. Identifikationseinheit (4) nach einem der vorhergehenden Ansprüche,
**dadurch gekennzeichnet, dass** die Kommunikationseinheit (4.2), Teilkommunikationseinheit oder Kommunikationsschnittstelle zur Kommunikation mit der Verbrauchswerterfassungseinheit (3) und/oder die Kommunikationseinheit, Teilkommunikationseinheit oder Kommunikationsschnittstelle zur Kommunikation mit der Datenerfassungseinheit (2) als eine definierte Schnittstelle, insbesondere als eine standardisierte Schnittstelle ausgebildet ist/sind.

4. Identifikationseinheit (4) nach einem der vorhergehenden Ansprüche, **gekennzeichnet durch** ein Mittel zur Eingabe der Erfassungsortidentifikation.

5. Identifikationseinheit (4) nach einem der vorhergehenden Ansprüche, **gekennzeichnet durch** eine Energieversorgungseinheit (4.3).

6. Identifikationseinheit (4) nach einem der vorhergehenden Ansprüche, **gekennzeichnet durch** eine Speichereinheit zur Zwischenspeicherung von Daten von der Datenerfassungseinheit (2) an die Verbrauchswerterfassungseinheit (3) und/oder von Daten von der Verbrauchswerterfassungseinheit (3) an die Datenerfassungseinheit (2).

7. Identifikationseinheit (4) nach einem der vorhergehenden Ansprüche, **gekennzeichnet durch** eine Verarbeitungseinheit zur Umwandlung von empfangenen Daten in ein anderes Datenformat.

8. Verbrauchswerterfassungsvorrichtung (1) mit zumindest einer Identifikationseinheit (4) nach einem der Ansprüche 1 bis 7, welche an einem Erfassungsort (E) installiert ist, dessen Erfassungsortidentifikation in einem Speicher (4.1) der Identifikationseinheit (4) gespeichert ist, wobei die Identifikationseinheit (4) über eine erste Kommunikationsverbindung (K1) zumindest zeitweise mit zumindest einer am Erfassungsort (E) installierten Verbrauchswerterfassungseinheit (3) verbunden ist und über eine zweite Kommunikationsverbindung (K2) zumindest zeitweise mit zumindest einer Datenerfassungseinheit (2) verbunden ist und wobei die erste Kommunikationsverbindung (K1) und die zweite Kommunikationsverbindung (K2) jeweils als eine drahtgebundene Verbindung oder als eine drahtlose Verbindung, insbesondere Funkverbindung, ausgebildet sind.

9. Verbrauchswerterfassungsvorrichtung (1) nach Anspruch 8,
**dadurch gekennzeichnet, dass** die erste Kommunikationsverbindung (K1) und/oder die zweite Kommunikationsverbindung (K2) bidirektional ausgebildet ist/sind.

10. Verfahren zur Erfassung von Verbrauchswerten unter Verwendung einer Verbrauchswerterfassungsvorrichtung (1) nach Anspruch 8 oder 9, wobei Daten einer an einem Erfassungsort (E) installierten Verbrauchswerterfassungseinheit (3) und eine Erfassungsortidentifikation, welche in einem Speicher (4.1) einer am Erfassungsort (E) installierten Identifikationseinheit (4) gespeichert ist, gemeinsam zu zumindest einer Datenerfassungseinheit (2) übertragen werden, wobei die Daten der Verbrauchswerterfassungseinheit (3) über eine erste Kommunikationsverbindung (K1) von der Verbrauchswerterfassungseinheit (3) zur Identifikationseinheit (4) übertragen werden und zusammen mit der Erfassungsortidentifikation über eine zweite Kommunikationsverbindung (K2) von der Identifikationseinheit (4) zur Datenerfassungseinheit (2) übertragen werden.

## Claims

1. Identification unit (4) for a consumption value acquisition device (1), wherein the identification unit (4) is embodied as a mount of the consumption value acquisition unit (3) or is integrated into a mount of the consumption value acquisition unit (3), and wherein the mount is embodied as a mounting plate, comprising a memory (4.1) for storing an acquisition location identification and a communication unit (4.2) for communication with at least one consumption value acquisition unit (3),
**characterized by** a communication unit (4.2) for communication with at least one data acquisition unit (2).

2. Identification unit (4) according to Claim 1, **characterized in that** the communication unit (4.2) is designed both for communication with the at least one consumption value acquisition unit (3) and for communication with the at least one data acquisition unit (2) and for this purpose has two partial communication units or two communication interfaces, wherein one partial communication unit or communication interface is designed for communication with the consumption value acquisition unit (3) and the other partial communication unit or communication interface is designed for communication with the data acquisition unit (2).

3. Identification unit (4) according to either of the preceding claims,
**characterized in that** the communication unit (4.2), partial communication unit or communication interface for communication with the consumption value acquisition unit (3) and/or the communication unit, partial communication unit or communication interface for communication with the data acquisition unit (2) is/are embodied as a defined interface, in particular as a standardized interface.

4. Identification unit (4) according to any of the preceding claims,
**characterized by** a means for inputting the acquisition location identification.

5. Identification unit (4) according to any of the preceding claims,
**characterized by** an energy supply unit (4.3).

6. Identification unit (4) according to any of the preceding claims,
**characterized by** a memory unit for buffer storage of data from the data acquisition unit (2) to the consumption value acquisition unit (3) and/or data from the consumption value acquisition unit (3) to the data acquisition unit (2).

7. Identification unit (4) according to any of the preceding claims,
**characterized by** a processing unit for converting received data into a different data format.

8. Consumption value acquisition device (1) comprising at least one identification unit (4) according to any of Claims 1 to 7, which is installed at an acquisition location (E), the acquisition location identification of which is stored in a memory (4.1) of the identification unit (4), wherein the identification unit (4) is connected via a first communication link (K1) at least at times to at least one consumption value acquisition unit (3) installed at the acquisition location (E) and is connected via a second communication link (K2) at least at times to at least one data acquisition unit (2), and wherein the first communication link (K1) and the second communication link (K2) are embodied in each case as a wired link or as a wireless link, in particular radio link.

9. Consumption value acquisition device (1) according to Claim 8,
**characterized in that** the first communication link (K1) and/or the second communication link (K2) is/are embodied in a bidirectional fashion.

10. Method for acquiring consumption values using a consumption value acquisition device (1) according to Claim 8 or 9, wherein data of a consumption value acquisition unit (3) installed at an acquisition location (E) and an acquisition location identification stored in a memory (4.1) of an identification unit (4) installed at the acquisition location (E) are transmitted jointly to at least one data acquisition unit (2), wherein the data of the consumption value acquisition unit (3) are transmitted via a first communication link (K1) from the consumption value acquisition unit (3) to the identification unit (4) and are transmitted together with the acquisition location identification via a second communication link (K2) from the identification unit (4) to the data acquisition unit (2).

## Revendications

1. Unité d'identification (4) pour un dispositif de relevé de valeurs de consommation (1), dans laquelle l'unité d'identification (4) est conçue comme un support de l'unité de relevé de valeurs de consommation (3) ou est intégrée dans un support de l'unité de relevé de valeurs de consommation (3) et dans laquelle le support est conçu comme une plaque de montage, comprenant une mémoire (4.1) pour mémoriser une identification de lieu de relevé et une unité de communication (4.2) pour communiquer avec au moins une unité de relevé de valeurs de consommation (3), **caractérisée par** une unité de communication (4.2) pour communiquer avec au moins une unité de relevé de données (2).

2. Unité d'identification (4) selon la revendication 1, **caractérisée en ce que** l'unité de communication (4.2) est conçue tant pour la communication avec au moins une unité de relevé de valeurs de consommation (3) que pour la communication avec au moins une unité de relevé de données (2) et présente dans ce but deux unités de communication partielle ou deux interfaces de communication, dans laquelle une des unités de communication partielle ou interfaces de communication est conçue afin de communiquer avec l'unité de relevé de valeurs de consommation (3) et l'autre unité de communication partielle ou interface de communication est conçue afin de communiquer avec l'unité de relevé de données (2).

3. Unité d'identification (4) selon une des revendications précédentes, **caractérisée en ce que** l'unité de communication (4.2), l'unité de communication partielle ou l'interface de communication pour communiquer avec l'unité de relevé de valeurs de consommation (3) et/ou l'unité de communication, l'unité de communication partielle ou l'interface de communication pour communiquer avec l'unité de relevé de données (2) est/sont conçue(s) comme une interface définie, notamment comme une interface standardisée.

4. Unité d'identification (4) selon une des revendications précédentes, **caractérisée par** un moyen d'entrée de l'identification de lieu de relevé.

5. Unité d'identification (4) selon une des revendications précédentes, **caractérisée par** une unité d'alimentation en énergie (4.3).

6. Unité d'identification (4) selon une des revendications précédentes, **caractérisée par** une unité de mémoire pour la mémorisation intermédiaire de données provenant de l'unité de relevé de données (2) sur l'unité de relevé de valeurs de consommation (3) et/ou de données provenant de l'unité de relevé de valeurs de consommation (3) sur l'unité de relevé de données (2).

7. Unité d'identification (4) selon une des revendications précédentes, **caractérisée par** une unité de traitement pour convertir les données reçues dans un autre format de données.

8. Dispositif de relevé de valeurs de consommation (1) comportant au moins une unité d'identification (4) selon une des revendications 1 à 7, qui est installé sur un lieu de relevé (E), dont l'identification de lieu de relevé est mémorisée dans une mémoire (4.1) de l'unité d'identification (4), dans lequel l'unité d'identification (4) est reliée par l'intermédiaire d'une première liaison de communication (K1) au moins temporairement avec au moins une unité de relevé de valeurs de consommation (3) installée sur le lieu de relevé (E) et est reliée par l'intermédiaire d'une deuxième liaison de communication (K2) au moins temporairement avec au moins une unité de relevé de données (2) et dans lequel la première liaison de communication (K1) et la deuxième liaison de communication (K2) sont conçues respectivement comme une liaison câblée ou une liaison sans fil, notamment une liaison radio.

9. Dispositif de relevé de valeurs de consommation (1) selon la revendication 8, **caractérisé en ce que** la première liaison de communication (K1) et/ou la deuxième liaison de communication (K2) est/sont conçue(s) bidirectionnellement.

10. Procédé de relevé de valeurs de consommation en utilisant un dispositif de relevé de valeurs de consommation (1) selon la revendication 8 ou 9, dans lequel des données d'une unité de relevé de valeurs de consommation (3) installée sur un lieu de relevé (E) et une identification de lieu de relevé, qui est mémorisée dans une mémoire (4.1) d'une unité d'identification (4) installée sur un lieu de relevé (E) sont transmises conjointement à au moins une unité de relevé de données (2), dans lequel les données de l'unité de relevé de valeurs de consommation (3) sont transmises par l'intermédiaire d'une première liaison de communication (K1) de l'unité de relevé de valeurs de consommation (3) vers l'unité d'identification (4) et conjointement à l'identification de lieu de relevé sont transmises par l'intermédiaire d'une deuxième liaison de communication (K2) de l'unité d'identification (4) vers l'unité de détection de données (2).
